# EUROPÄISCHE PATENTSCHRIFT

(11) **EP 1 048 879 B1**
(45) Veröffentlichungstag und Bekanntmachung des Hinweises auf die Patenterteilung: **23.06.2004**
(21) Anmeldenummer: 00107805.4
(22) Anmeldetag: 12.04.2000
(51) Int. Cl.: F16H 61/00, F04C 15/04

(54) **Druckmittelversorgung eines CVT-Getriebes**
Pressure fluid supply of a CVT
Alimentation en fluide sous pression d' une transmission de type CVT

(30) Priorität: 30.04.1999 DE 19919815; 31.05.1999 DE 19924855
(43) Veröffentlichungstag der Anmeldung: 02.11.2000
(73) Patentinhaber: Hydraulik-Ring GmbH, 09212 Limbach-Oberfrohna (DE)
(72) Erfinder: Eisenbacher, Egon, 97753 Karlstadt (DE); Unsöld, Manfred, 97848 Rechtenbach (DE)
(74) Vertreter: Kohl, Karl-Heinz, Dipl.-Ing.

(56) Entgegenhaltungen:
- EP-A- 0 445 529
- EP-A- 0 502 263
- EP-A- 0 881 414
- EP-A- 1 046 819
- DE-A- 3 727 633
- DE-A- 19 846 815
- PATENT ABSTRACTS OF JAPAN vol. 013, no. 477 (M-885), 27. Oktober 1989 (1989-10-27) & JP 01 188746 A (DAIHATSU MOTOR CO LTD), 28. Juli 1989 (1989-07-28)
- PATENT ABSTRACTS OF JAPAN vol. 008, no. 201 (M-325), 14. September 1984 (1984-09-14) & JP 59 089858 A (TOYODA KOKI KK), 24. Mai 1984 (1984-05-24) & JP 59 089858 A (TOYODA KOKI KK) 24. Mai 1984 (1984-05-24)
- PATENT ABSTRACTS OF JAPAN vol. 012, no. 105 (M-681), 6. April 1988 (1988-04-06) & JP 62 234733 A (TOYOTA CENTRAL RES & DEV LAB INC), 15. Oktober 1987 (1987-10-15) & JP 62 234733 A (TOYOTA CENTRAL RES & DEV LAB) 15. Oktober 1987 (1987-10-15)

## Beschreibung

Die Erfindung betrifft eine Druckmittelversorgung eines CVT-Getriebes (continous variable transmission) gemäß dem Oberbegriff des Patentanspruchs 1.

Derartige CVT-Getriebe sind bereits seit einigen Jahren bekannt und ermöglichen eine stufenlose Änderung der Getriebeübersetzung eines Kraftfahrzeugs. Nachdem die CVT-Getriebe sich bisher gegenüber herkömmlichen Automatikgetrieben nicht durchsetzen konnten, sind im Zuge der Entwicklung drehmomentstarker Dieselmotoren (Common-Rail-Kraftstoffeinspritzsystem, Pumpe-Düse-Kraftstoffeinspritzsystem) Bestrebungen im Gange, die Vorteile des CVT-Getriebes, d.h., die Möglichkeit der stufenlosen Veränderung der Getriebeübersetzung in Abhängigkeit von den Betriebsparametern des Motors zu nutzen. Derartige Getriebe ermöglichen es beispielsweise, den Motor in Abhängigkeit von den Fahrzuständen (Beschleunigen, stetige Fahrt, Abbremsen etc.) in vorbestimmten Drehmoment- oder Leistungsbereichen zu halten, so daß eine optimale Leistungsabgabe bei optimiertem Verbrauch gewährleistet ist.

Fig. 1 zeigt ein Grundkonzept eines CVT-Getriebes, wie es beispielsweise in der EP 0 272 109 A2 oder EP 0 076 552 A1 offenbart ist.

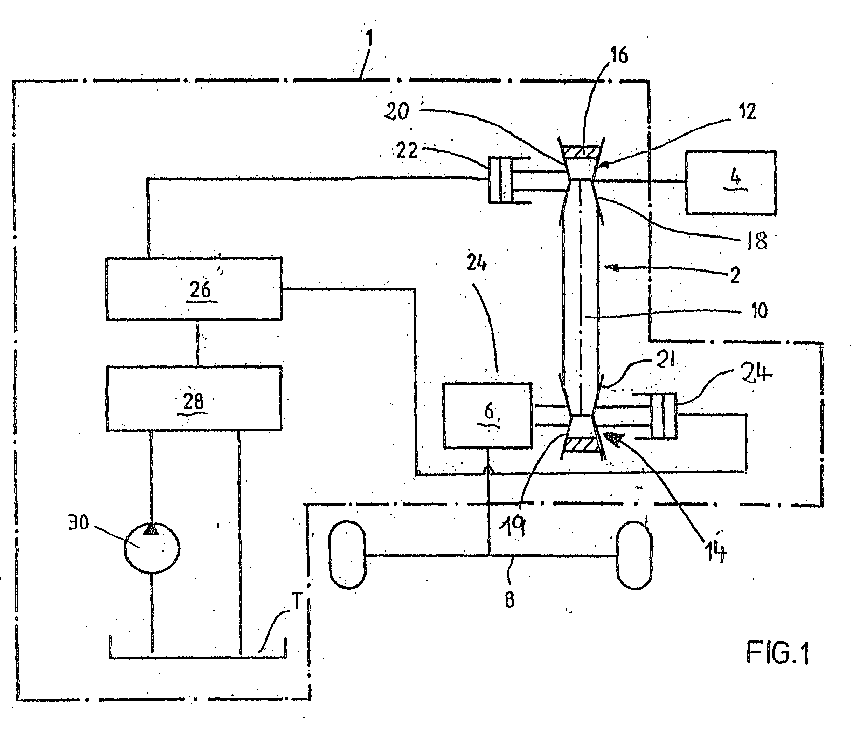

Kernstück des in Fig. 1 schematisch dargestellten CVT-Getriebes 1 ist ein Riemen- oder Kolbentrieb 2, über den die Kurbelwelle eines Verbrennungsmotors 4 mit einem Reduktionsgetriebe 6 eines Kraftfahrzeugs verbunden ist. Das Übersetzungsverhältnis des Riementriebs läßt sich beispielsweise im Bereich von 3:1 bis zu 0,3:1 stufenlos verstellen, so daß der Motor 4 in Abhängigkeit vom gewünschten Fahrzustand stets im optimalen Drehmoment-/Leistungsbereich gehalten werden kann.

Der Riementrieb hat einen Riemen 10, der auf zwei Keilscheiben 12, 14 geführt ist. Die in Fig. 1 obere Keilscheibe 12 ist mit dem Motor 4 gekoppelt, während die untere Keilscheibe 14 mit dem Reduktionsgetriebe 6 verbunden ist. Der Riemen 10 besteht üblicherweise aus umlaufenden Stahlringen, die eine Vielzahl von plattenförmigen Elementen 16 tragen, über die der Riemen 10 auf den Keilscheiben 12, 14 aufliegt.

Jede der Keilscheiben 12, 14 hat eine feststehende Scheibe 18 bzw. 19 und eine bewegliche Scheibe 20 bzw. 21, die mit Bezug zur zugeordneten feststehenden Scheibe 18, 19 in Axialrichtung verschiebbar ist, um die Stützweite für den Riemen 10 oder besser gesagt für die Elemente 16 zu verändern. Die Verschiebung der beweglichen Scheiben 20, 21 erfolgt über Stellzylinder 22, 24, wobei beispielsweise der der motorseitigen Keilscheibe 12 zugeordnete Stellzylinder 22 eine größere Stirnfläche als der reduktionsgetriebeseitige Zylinder 24 haben kann. Die Stellzylinder 22, 24 sind über ein Steuergerät 26 und eine Regelventilanordnung 28 mit einer Pumpe 30 und einem Druckmitteltank T verbunden.

Wie aus dem Schema gemäß Fig. 1 hervorgeht, sind die beiden beweglichen Scheiben 20, 21 bzw. die feststehenden Scheiben 18, 19 über Kreuz angeordnet, so daß der Riemen 10 stets gerade, d.h. in der Vertikalen zu den Achsen der Keilscheiben 12, 14 geführt ist.

Das Steuergerät 26 enthält beispielsweise einen Zweikanten- oder Vierkanten-Steuerschieber, über den das von der Pumpe 30 geförderte Druckmittel auf die beiden Stellzylinder 22, 24 aufgeteilt werden kann, um die gewünschten Stellbewegungen durchzuführen. Aufgrund der unterschiedlichen Stirnflächen der Stellzylinder 22, 24 wird beispielsweise bei Druckgleichheit aufgrund der vom Stellzylinder 22 größeren übertragenen Kraft die Stützweite der motorseitigen Stellscheibe 12 verringert und entsprechend die Stützweite der reduktionsgetriebeseitigen Keilscheibe 14 gegen die vom Stellzylinder 24 übertragene Kraft vergrößert, so daß der Riemen 10 in der Darstellung nach Fig. 1 nach oben wandert.

Über die Regelventilanordnung 28 wird der Förderstrom der Pumpe 30 eingestellt, so daß stets nur die erforderliche Druckmittelmenge zu den Stellzylindern 22, 24 oder von diesen zum Tank T hin strömt.

Als Pumpe 30 werden häufig Drehkolbenpumpen, beispielsweise Innenzahnradpumpen eingesetzt, da sie einen vergleichsweise einfachen Aufbau aufweisen und bei geringem Gewicht relativ hohe Drücke erlauben. Ein weiterer Vorteil von Innenzahnradpumpen liegt darin, daß diese in einem vergleichsweise großen Drehzahl-, Temperatur- und Viskositätsbereich einsetzbar und pulsations- und geräuscharm sind.

In der EP 0 445 529 B1 ist eine Zahnradpumpe beschrieben, bei der zwei Zahnräder in einem Gehäuse drehbar gelagert sind. Die Verdrängerkammern werden durch miteinander kämmende Zahnflanken, eine Gehäuseinnenwandung und eine Axial- oder Druckplatte begrenzt. Letztere wird rückseitig von Druckmittel beaufschlagt, so daß diese dichtend in Anlage an den Zahnradstirnflächen gehalten wird. Der auf die Rückseite der Druckplatte wirkende Druck kann über eine Regelventilanordnung eingestellt werden, bei der eine durch ein Wegeventil gebildete Meßblende und eine 3-Wege-Druckwaage zusammenwirken. Diese wird im Sinne einer Erhöhung des rückseitigen Drucks von dem Druck stromabwärts der Meßblende und einer Druckfeder und im Sinne einer Verringerung des rückseitigen Drucks von dem Druck stromaufwärts der Meßblende beaufschlagt. Die Druckwaage verbindet dazu einen mit einem Druckraum auf der Rückseite der Druckplatte verbundenen Steueranschluß mit dem Druckausgang der Pumpe oder mit dem Tank, wodurch der Dichtspalt zwischen Druckplatte und den Zahnradstirnflächen verkleinert bzw. vergrößert wird. Bei vergrößertem Dichtspalt kann das Druckmittel direkt von der Hochdruckseite zur Niederdruckseite abströmen, so daß der volumetrische Wirkungsgrad der Zahnradmaschine verringerbar und somit die Fördermenge einer Zahnradpumpe in Abhängigkeit von der Spaltweite einstellbar ist. D. h., durch Beeinflussung des auf die Druckplatte wirkenden Druckmitteldruckes kann eine exakte Förderstromregelung erfolgen.

In der US 4 014 630 ist eine Pumpenanordnung dargestellt, bei der eine Dichtplatte über eine Feder in eine Anlageposition an die Förderelemente gedrückt ist. Der Federraum ist über eine Drosselbohrung mit dem Verdrängerraum der Pumpenanordnung verbunden, so daß die Druckplatte auch hydraulisch in ihre Dichtposition vorgespannt ist. Der auf die Druckplatte wirkende Druck kann wiederum über eine Regelventilanordnung beeinflußt werden, über die das Druckmittel in einen Tank ableitbar ist.

Bei den zuvor beschriebenen Konstruktionen ist ein erheblicher Aufwand zu betreiben, um den Förderstrom der Pumpe schnell an Änderungen der Betriebsparameter des Motors anzupassen.

Bei der gattungsgemäßen Druckmittelversorgung (EP-A-0 881 414) fördert eine Pumpe Medium in ein Regelventil. Mit einem zweiten, elektrisch angesteuerten Regelventil kann der Druck in einer Kammer des Regelventiles eingestellt werden, so daß der Kolben des Regelventiles entsprechend der Druckbeaufschlagung durch das Druckmedium verschoben wird. Das weitere Regelventil befindet sich außerhalb der Pumpe.

Bei einer anderen bekannten Druckmittelversorgung (DE 37 27 633 A) sind zwei Pumpen vorgesehen, die das Druckmedium einem gesonderten Ventil zuführen. Bei dieser Druckmittelversorgung sind somit die Pumpen und das Ventil ebenfalls gesonderte Baueinheiten.

Demgegenüber liegt der Erfindung die Aufgabe zugrunde, eine Druckmittelversorgung eines CVT-Getriebes zu schaffen, die eine schnelle Anpassung des Förderstroms an Änderungen der Betriebs- und Bedienparameter eines Kraftfahrzeugmotors erlaubt.

Diese Aufgabe wird bei der gattungsgemäßen Druckmittelversorgung erfindungsgemäß mit den kennzeichnenden Merkmalen des Patentanspruches 1 gelöst.

Bei der erfindungsgemäßen Druckmittelversorgung wird die der Pumpe zugeordnete Regelventilanordnung elektrisch angesteuert, so daß die Förderstromänderung bereits vorab, d.h. beispielsweise beim Einleiten eines Beschleunigungs- oder Bremsvorganges anpaßbar ist. Über geeignete Sensoren werden Veränderungen der entsprechenden Stellglieder (Gaspedal, Benzin- oder Diesetpumpe, Bremspedal usw.) erfaßt und in Abhängigkeit dieser Veränderungen von der Motorsteuerung ein Signal an die Regelventilanordnung abgegeben, so daß eine schnellstmögliche Anpassung des Förderstroms der Pumpe erfolgen kann. Die Verstellpumpe ist als Drehkolbenpumpe (vorzugsweise als Innenzahnradpumpe) ausgebildet, bei der die Verdrängerkammern stirnseitig durch die Druckplatte abgedichtet sind. Sie ist hydraulisch in ihre Dichtposition vorgespannt, so daß der Dichtspalt durch Veränderung des auf die Rückseite der Druckplatte wirkenden Druckes einstellbar ist. Bei abgehobener Dichtplatte kann das Druckmittel direkt vom Hochdruckbereich in den Niederdruckbereich zurückströmen, so daß der Förderstrom abgesenkt wird. Zur Veränderung des auf die Druckplatte wirkenden Druckes werden erfindungsgemäß drei Konzepte favorisiert.

Bei der ersten, in Anspruch 2 definierten Variante erfolgt die Einstellung des Förderstroms über eine Zweikanten-Stromregelung, bei der eine Druckwaage mit dem Druck stromabwärts und stromaufwärts einer Meßblende beaufschlagt und elektrisch verstellbar ist, um einen mit der Druckplattenrückseite verbundenen Steueranschluß zur Steuerdruckerniedrigung mit einem Rücklaufanschluß und zur Steuerdruckerhöhung mit der Pumpe zu verbinden.

Diese Druckwaage verbindet in einer Endposition den Druckanschluß und den Rücklaufanschluß mit dem Tank, so daß die Druckplatte entlastet wird und eine schnelle Anpassung an Förderstromänderungen möglich ist.

Die Regelanordnung läßt sich besonders kompakt ausführen, wenn die Meßblende als Meßblendenbohrung im Kolben der Druckwaage ausgeführt ist. Der Kolben hat darüber hinaus zwei Steuerkanten, über die die Verbindung des Steueranschlusses zum Tankanschluß und zum Druckanschluß auf- bzw. zusteuerbar sind. Eine derartige Konstruktion ist in der nachveröffentlichten Patentanmeldung 199 17 593 beschrieben, deren Offenbarung diesbezüglich zu derjenigen der vorliegenden Anmeldung zu zählen ist.

Alternativ kann der Förderstrom der Pumpe auch über eine Einkanten-Stromregelung oder eine Einkanten-Druckregelung ausgeführt werden.

Letztere erfolgt beispielsweise über ein elektrisch betätigtes Druckbegrenzungsventil, über das der auf die Rückseite der Druckplatte wirkende Steuerdruck auf einen Maximaldruck begrenzbar ist. Dieser Steuerdruck wird über eine Zulaufblende von der Hochdruckseite der Pumpe abgegriffen und zur Rückseite der Druckplatte geführt.

Bei der Einkanten-Stromregelung ist eine 2-Wege-Druckwaage einerseits von dem Druck stromabwärts einer in der Druckleitung angeordneten Meßblende und andererseits von der Kraft eines Elektromagneten und dem Druck stromabwärts der Meßblende beaufschlagt, wobei die beiden letztgenannten Kraftkomponenten in Schließrichtung wirken. Bei ansteigender Druckdifferenz über der Meßblende wird die Druckwaage in ihre Durchgangsstellung gebracht, in der der Steuerdruck zum Tank T hin abgebaut wird, so daß die Druckplatte abhebt.

Sonstige vorteilhafte Weiterbildungen der Erfindung sind Gegenstand der weiteren Unteransprüche.

Im folgenden werden bevorzugte Ausführungsbeispiele anhand schematischer Zeichnungen näher erläutert. Es zeigen:
- Fig. 1: eine Prinzipdarstellung eines CVT-Getriebes;
- Fig. 2: einen Schnitt durch eine Innenzahnradpumpe für das CVT-Getriebe gemäß Fig. 1;
- Fig. 3: einen Schnitt entlang der Linie A-A in Fig. 2;
- Fig. 4: ein Schaltschema einer Zweikanten-Stromregelung für die Innenzahnradpumpe aus Fig. 2;
- Fig. 5: ein Schaltschema einer Einkanten-Stromregelung für die Innenzahnradpumpe aus Fig. 2 und
- Fig. 6: ein Schaltschema einer Einkanten-Druckregelung für die Innenzahnradpumpe aus Fig. 2.

Im folgenden werden für einander entsprechende Bauelemente die gleichen Bezugszeichen verwendet, wie sie bereits bei der Beschreibung des CVT-Getriebes gemäß Fig. 1 zugeordnet wurden.

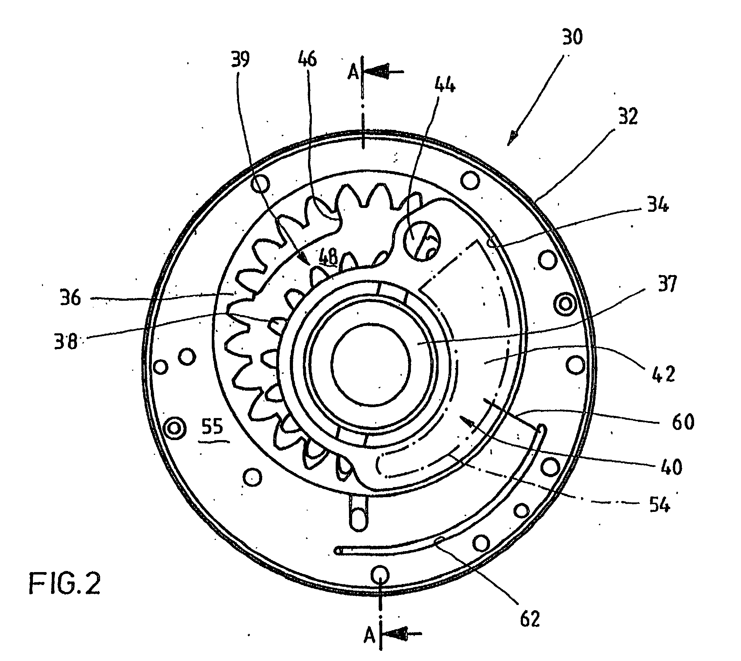

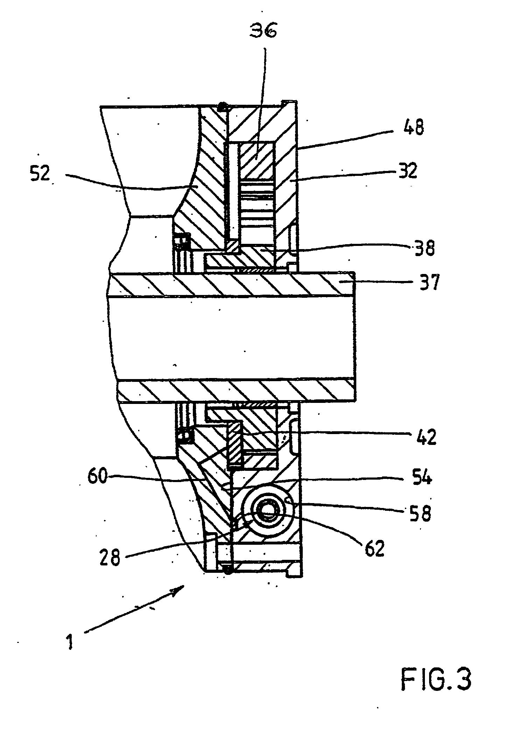

Fig. 2 zeigt eine Draufsicht auf eine Innenzahnradpumpe 30, die bei dem CVT-Getriebe 1 zur Druckmittelförderung einsetzbar ist. Der Einfachheit halber wurde bei der Darstellung gemäß Fig. 2 ein Gehäusedeckel weggelassen. Fig. 3 zeigt einen Schnitt durch die Innenzahnradpumpe 30 entlang der Linie A-A in Fig. 2.

Der Grundaufbau dieser Innenzahnradpumpe 30 ist bereits aus dem Stand der Technik beispielsweise aus der DE 43 22 240 C2 der Anmelderin bekannt, so daß im folgenden nur auf die wesentlichen Bauelemente eingegangen wird. Die Innenzahnradpumpe 30 hat ein topfförmiges Gehäuse 32 mit einer exzentrisch angeordneten Aufnahme 34 für ein Hohlrad 36. Dieses kämmt mit einem Ritzel 38, das auf einer das Gehäuse 32 durchsetzenden Achse 37 angetrieben ist. Der Antrieb des Ritzels 38 erfolgt über einen ebenfalls auf der Achse 37 gelagerten Mitnehmer (nicht gezeigt). Aufgrund der exzentrischen Anordnung des Hohlrades 36 mit Bezug zum Ritzel 38 läßt sich der durch die Aufnahme 32 begrenzte Raum in einen Niederdruckbereich 39 und einen Hochdruckbereich 40 unterteilen.

Den stirnseitigen Abschluß des Hochdruckbereichs 40 bildet eine Druckplatte 42. In diesem Hochdruckbereich 40 greifen die Zähne des Hohlrades 36 und des Ritzels 38 ineinander ein, so daß zwischen jeweils zwei Zähnen ein Verdrängerraum gebildet ist, der stirnseitig von der Druckplatte 42 und dem Boden der Aufnahme 32 begrenzt ist.

Im Übergangsbereich zwischen Niederdruckbereich 39 und Hochdruckbereich 40 ist ein nicht dargestelltes Füllstück angeordnet, das über einen Füllstückstift 44 im Gehäuse abgestützt ist. Das Füllstück liegt mit seinen Seitenflächen an den Zähnen des Ritzels 38 und des Hohlrads 36 an, so daß in den Zahnlücken befindliches Druckmittel entlang des Füllstückes in den Zahneingriffsbereich (Hochdruckbereich 40) geführt wird. Die Zuführung des Druckmittels in den Niederdruckbereich 39 erfolgt durch eine Saugöffnung 46 in der Stirnfläche 48 des Gehäuses 32. Das druckbeaufschlagte Druckmittel wird durch eine nicht dargestellte Drucköffnung in der Stirnfläche 48 abgeführt. Die Saugöffnung 46 und die Drucköffnung haben einen in etwa nierenförmigen Querschnitt, wobei die Saugöffnung 46 radial weiter außen liegend angeordnet ist als die Drucköffnung.

Fig. 3 zeigt einen Schnitt entlang der Linie A-A in Fig. 2. Demgemäß erfolgt der stirnseitige Abschluß der Innenzahnradpumpe 1 mittels eines Gehäusedeckels 52, der auf die in Fig. 2 sichtbare Flanschfläche 55 des Gehäuses aufgeschraubt ist. Der Gehäusedeckel 52 liegt mit einer in Fig. 2 angedeuteten Dichtung 54 auf der Druckplatte 42 auf. Die Dichtung 54 umgreift ein Druckfeld, das in der im folgenden noch näher beschriebenen Weise mit Hochdruck beaufschlagt ist. Über dieses Druckfeld wird die in Axialrichtung mit Spiel zwischen dem Gehäusedeckel 52 und den Stirnflächen des Hohlrads 36 und des Ritzels 38 aufgenommene Druckplatte 42 in ihre Anlageposition gegen die Stirnflächen (s. Fig. 3) vorgespannt. In der Gegenrichtung ist die Druckplatte 42 durch den Druck im Hochdruckbereich 40 beaufschlagt.

Die Druckplatte 42 kann in Axialrichtung bewegt werden, so daß der Dichtspalt zwischen den Stirnflächen der Zahnräder 36, 38 und der Anlagefläche der Dichtplatte 42 einstellbar ist. D.h., bei Vergrößerung dieses Dichtspaltes kann Druckmittel direkt vom Hochdruckbereich 40 in den Niederdruckbereich 39 einströmen, so daß der volumetrische Wirkungsgrad der Innenzahnradpumpe 1 verringert wird und somit der abgegebene Volumenstrom durch Variation des Druckspaltes einstellbar ist.

Der Anpreßdruck der Dichtplatte 42 wird über eine Regelventilanordnung 28 eingestellt.

Wie Fig. 3 entnehmbar ist, kann diese Regelventilanordnung 28 beispielsweise in einem etwa tangential verlaufenden Druckkanal 58 eingesetzt werden, der mit dem nicht dargestellten Druckanschluß der Pumpe verbunden ist. Über die Regelventilanordnung 28 läßt sich ein Steuerdruck erzeugen, der über einen Steuerkanal 60 im Gehäusedeckel 52 zur Rückseite der Druckplatte 42 geführt wird. Der Steuerkanal 60 ist dabei über einen Verbindungskanal 62 mit einem Steueranschluß der Regelventilanordnung 28 verbunden.

Wie bereits erwähnt, ist bei der vorbeschriebenen Konstruktion der Innenzahnradpumpe 30 die Regelventilanordnung 28 ins Gehäuse 32 integriert. Selbstverständlich läßt sich die Erfindung auch bei Varianten einsetzen, bei denen die Regelventilanordnung 28 als Anbauteil oder als getrenntes Bauelement ausgebildet ist.

Im folgenden sind drei Varianten einer zur Ansteuerung der in den Fig. 2 und 3 dargestellten Innenzahnradpumpe 30 geeigneten Schaltung erläutert.

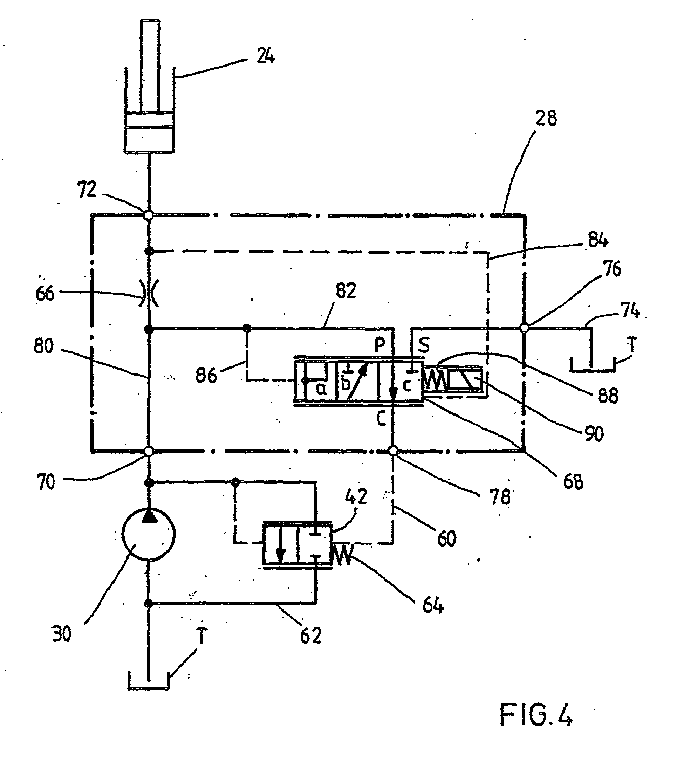

Der Einfachheit halber wird in den folgenden Fig. 4, 5 und 6 lediglich einer der Fig. 1 entnehmbaren Stellzylinder 22 und 24 dargestellt, der sinnbildlich für das Steuergerät 26 und die daran angeschlossenen Stellzylinder 22, 24 sowie den Riementrieb 2 steht.

Die in den Fig. 2 und 3 dargestellte Innenzahnradpumpe 30 ist in den folgenden Figuren durch das Pumpensymbol (Bezugszeichen 30) und einen Bypass 62 symbolisiert, der durch die Druckplatte 42 absperrbar ist.

Die Druckplatte 42 ist in den folgenden Darstellungen als stetig verstellbares 2-Wegeventil gezeichnet, wobei die Druckplatte 42 in der Sperrstellung den Bypass 62 absperrt (Druckplatte liegt dichtend auf) und bei Verringern des Druckes im Druckfeld 54 den Dichtspalt vergrößert und somit in eine Öffnungsstellung gebracht wird, in der das druckbeaufschlagte Druckmittel vom Hochdruckbereich 40 über den Bypass 62 in den Niederdruckbereich 39 abströmen kann.

Die Druckplatte 42 ist einerseits von dem Druck im Hochdruckbereich, d.h. dem Druck in den Verdrängerräumen in Öffnungsrichtung und andererseits vom Druck im Steuerkanal 60 und der Kraft einer Feder 64 in Schließrichtung beaufschlagt.

Die Einstellung des Förderstromes erfolgt über die Regelventilanordnung 28, die in der Darstellung gemäß Fig. 4 strichpunktiert angedeutet ist.

Bei dem in Fig. 4 dargestellten Ausführungsbeispiel hat die Regelventilanordnung 28 eine Meßblende 66 und eine stetig verstellbare 3-Wege-Druckwaage 68.

Die Regelventilanordnung 28 hat des weiteren einen mit der Innenzahnradpumpe 30 verbundenen Druckanschluß 70, einen mit den Stellzylindern 22, 24 verbundenen Arbeitsanschluß 72, einen mit dem Tank T über einen Rücklaufkanal 74 verbundenen Rücklaufanschluß 76 und einen Steueranschluß 78, an den der Steuerkanal 60 angeschlossen ist.

Die Meßblende 66 ist in einem Druckkanal 80 angeordnet, von dem stromaufwärts der Meßblende 66 eine Leitung 82 zu einem Eingangsanschluß P der Druckwaage 68 geführt ist. Der Rücklaufkanal 74 ist mit einem Anschluß S und der Steuerkanal 60 mit einem Anschluß C der Druckwaage 68 verbunden.

Der Kolben der Druckwaage 68 ist über eine Steuerleitung 84 mit dem Druck stromabwärts der Meßblende 66, über eine Steuerleitung 86 mit dem Druck stromaufwärts der Meßblende 66 beaufschlagt. Zusätzlich zu dem Druck in der Steuerleitung 84 wird der Kolben der Druckwaage 68 in die in Fig. 4 dargestellte Grundposition durch die Kraft einer Feder 88 beaufschlagt, deren Vorspannung durch einen Elektromagneten 90 veränderbar ist. Dieser ist an die Motor- oder Getriebesteuerung angeschlossen, so daß die Federvorspannung 88 in Abhängigkeit von den Bedien- oder Betriebsparametern des Kraftfahrzeugmotors ansteuerbar ist.

In der dargestellten Grundposition ist der Anschluß S abgesperrt und die beiden Anschlüsse P und C der Druckwaage 68 sind miteinander verbunden, so daß der Druck stromaufwärts der Meßblende 66 über die Leitung 82 und den Steuerkanal 60 zur Rückseite der Druckplatte 42 geführt ist. Beim Ansteigen des Fördermittelvolumenstromes wird der Kolben 68 aufgrund des Druckabfalls über der Meßblende 66 bei Überschreiten einer durch die Vorspannung der Feder 88 vorbestimmten Druckdifferenz aus der dargestellten Grundposition (c) herausbewegt - der Kolben der Druckwaage 68 wird in eine von der Druckdifferenz über der Meßblende und von der Federvorspannung abhängige Regelposition gebracht. In dieser Regelposition liegt der Druck auf die Druckplatte 42 in seinem vorbestimmten Bereich, der durch Ansteuerung des Elektromagneten 90 veränderbar ist. Bei Überschreiten des vorbestimmten Druckes werden die Anschlüsse C und S verbunden, so daß der Druck im Steuerkanal 60 abgebaut und die Druckplatte 42 abgehoben wird - der Dichtspalt vergrößert sich, so daß Druckmittel vom Hochdruckbereich in den Niederdruckbereich abströmen kann. Der von der Innenzahnradpumpe 30 geförderte Volumenstrom wird abgesenkt.

Durch die Verringerung des Volumenstroms wird auch der Druckabfall über der Meßblende 66 verkleinert, so daß über die Druckwaage 68 wieder die Verbindung zwischen den Anschlüssen P und C aufgesteuert wird, so daß der Druck im Steuerkanal 60 ansteigt und der Dichtspalt der Druckplatte 42 verringert wird. D.h., in Abhängigkeit von der über den Elektromagneten 90 eingestellten Federvorspannung 88 läßt sich ein Volumenstrom - oder genauer gesagt - ein Druckabfall über der Meßblende 66 bestimmen, bei dem die vorbeschriebene Regelung zur Begrenzung des Volumenstroms einsetzen soll.

Die eingangs genannte ältere Patentanmeldung P 199 17 593 (entspricht EP-A-1046819, veröffentlicht am 25.10.2000) offenbart eine Konstruktion einer Regelventilanordnung 28, bei der die Meßblende 66 und die Druckwaage 68 zu einem hydraulisch angesteuerten Regelventil zusammengefaßt sind. Hinsichtlich weiterer Details der Ausgestaltung des Regelventils sei der Einfachheit halber auf die Offenbarung der älteren Anmeldung verwiesen.

Bei dem vorbeschriebenen Ausführungsbeispiel handelt es sich um eine sogenannte Zweikanten-Stromregelung, bei der der Anschluß C (Steueranschluß) zur Druckerhöhung mit dem Anschluß P (Druckanschluß) und zur Druckabsenkung mit dem Anschluß S (Rücklaufanschluß) verbindbar ist.

Bei dem in Fig. 4 dargestellten Ausführungsbeispiel ist die Druckwaage 68 des weiteren mit einer Stellung (a) ausgeführt, in der sowohl der Anschluß C als auch der Anschluß P mit dem Anschluß S verbunden sind. Diese Stellung (a) wird erreicht, wenn der Ausgangsdruck der Innenzahnradpumpe 30 sehr hoch ist und/oder die Federvorspannung der Feder 88 auf einen sehr geringen Wert eingestellt ist. In der mit (a) gekennzeichneten Stellung wird die Druckplatte 42 entlastet, so daß eine schnelle Änderung des Förderstroms möglich ist.

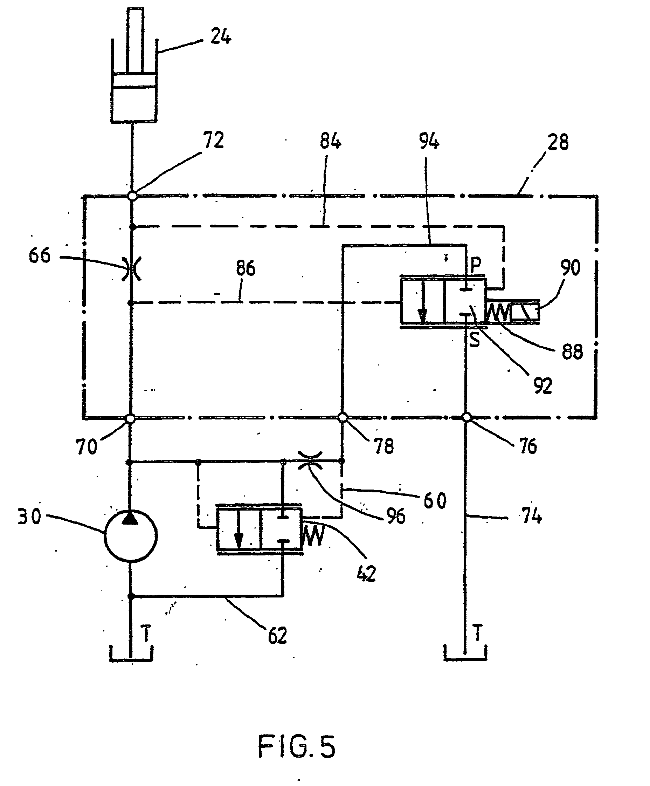

In Fig. 5 ist eine Variante dargestellt, bei der der Förderstrom über eine Einkantensteuerung geregelt ist.

Auch bei diesem Ausführungsbeispiel wird eine Innenzahnradpumpe 30 eingesetzt, deren Förderstrom durch Veränderung des Dichtspaltes einer Druckplatte 42 veränderbar ist.

Die in Fig. 5 angedeutete Regelventilanordnung 28 hat wie das zuvor beschriebene Ausführungsbeispiel einen Druckanschluß 70, einen Arbeitsanschluß 72, einen Steueranschluß 78 und einen Rücklaufanschluß 76. Die Regelventilanordnung 28 enthält des weiteren eine Meßblende 66 und eine 2-Wege Druckwaage 92. Die Stirnseiten des Kolbens der Druckwaage 92 werden wie beim zuvor beschriebenen Ausführungsbeispiel über Steuerleitungen 84, 86 mit dem Druck stromabwärts bzw. stromaufwärts der Meßblende 66 beaufschlagt, wobei der Druck stromabwärts der Meßblende in Schließrichtung der Druckwaage 92 und der Druck stromaufwärts der Meßblende 66 in Öffnungsrichtung der Druckwaage 92 wirkt. Der Kolben der Druckwaage 92.ist des weiteren über eine Feder 88 in Schließstellung vorgespannt, wobei die Federvorspannung ebenfalls wieder durch einen Elektromagneten 90 veränderbar ist.

Der Eingangsanschluß P der Druckwaage 92 ist über einen Kanal 94 und eine Zulaufblende 96 mit einem Leitungsbereich stromaufwärts der Meßblende 66 verbunden. Bei dem in Fig. 5 dargestellten Schaltschema mündet der Kanal 94 im Hochdruckbereich des Bypass 62.

Im Bereich zwischen dem Anschluß P und der Zulaufblende 96 zweigt der Steuerkanal 60 ab, über den die Rückseite der Druckplatte 42 mit dem Steuerdruck beaufschlagt wird.

In der in Fig. 5 dargestellten Grundposition ist der Kolben der Druckwaage 92 durch den Druck stromabwärts der Meßblende 66 und die Kraft der Feder 88 in die Schließposition vorgespannt, in der die Verbindung zwischen den Anschlüssen P und S abgesperrt ist. Der Druck stromaufwärts der Meßblende 66 wirkt auf die Druckplatte 42, so daß diese in ihre Dichtposition vorgespannt ist. Beim Ansteigen des Förderstroms steigt der Druckabfall über der Meßblende 66 an, so daß der Kolben der Druckwaage 92 in Abhängigkeit von der Vorspannung der Feder 88 aus der Sperrposition in eine Öffnungsposition gebracht werden kann, in der der Anschluß P mit dem Anschluß S verbunden wird, so daß Druckmittel in den Tank T abströmen kann. Durch dieses abströmende Druckmittel entsteht ein Druckabfall über der Zulaufblende 96, so daß die Druckplatte entlastet und der Dichtspalt vergrößert wird. Der Förderstrom der Innenzahnradpumpe 30 wird abgesenkt, bis die Druckwaage 92 wieder in ihre dargestellte Grundposition zurückgeführt wird. D.h., in der Regelposition der Druckwaage 92 wird der Druck auf die Druckplatte 42 im optimalen Bereich gehalten, der durch den Elektromagneten einstellbar ist.

Durch Einstellung der Vorspannung der Feder 88 über den Elektromagneten 90 kann somit wiederum der Volumenstrom eingestellt werden, bei dem die Volumenstromregelung der Innenzahnradpumpe 30 einsetzen soll.

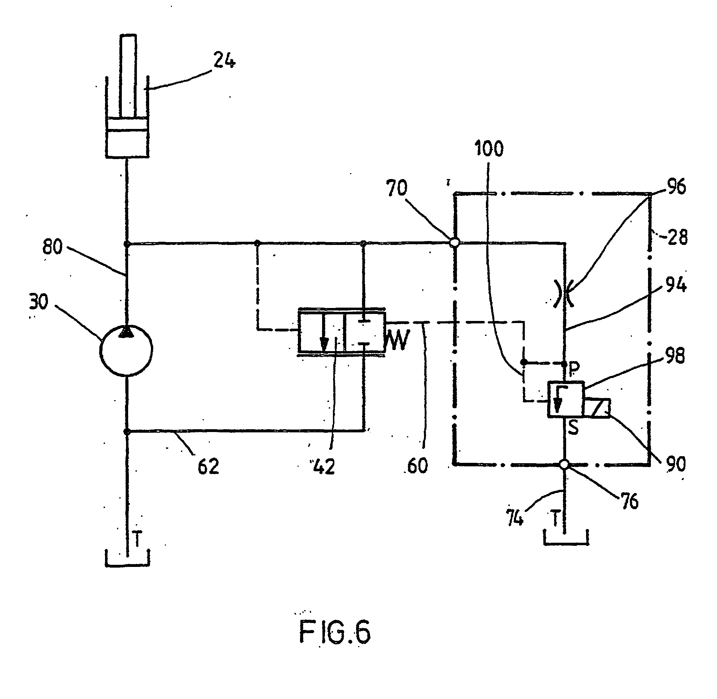

Fig. 6 zeigt schließlich ein letztes Ausführungsbeispiel, bei dem die Volumenstromregelung über eine Einkanten-Druckregelung erfolgt.

Ähnlich wie bei den zuvor beschriebenen Ausführungsbeispielen wird der Stellzylinder 24 über die Innenzahnradpumpe 30 mit Druckmittel aus dem Tank T versorgt, wobei die Druckplatte 42 der Innenzahnradpumpe 30 in Abhängigkeit von dem auf sie wirkenden Druck einen Bypass 62. auf- oder zusteuert, um eine interne Rückführung von Druckmittel zu ermöglichen bzw. zu unterbinden.

Die Regelventilanordnung 28 hat bei dem in Fig. 6 dargestellten Ausführungsbeispiel ein elektrisch betätigbares Druckbegrenzungsventil 98, dessen Ausgangsanschluß S mit dem Rücklaufkanal 74 und dessen Eingangsanschluß P über den Kanal 94 und eine Zulaufblende 96 mit dem Druckkanal 80 - oder genauer gesagt mit dem Hochdruckzweig des Bypass 62 -verbunden ist.

Die Rückseite der Druckplatte 42 wird über einen Steuerkanal 60 mit dem Druck stromabwärts der Zulaufblende 96 beaufschlagt. Dieser Druck wirkt über eine Steuerleitung 100 auch in Öffnungrichtung auf das Druckbegrenzungsventil 98.

Durch das Druckbegrenzungsventil 98 läßt sich somit der Druck im Steuerkanal 60 auf einen Grenzwert beschränken, der durch den Elektromagneten 90 einstellbar ist. Bei Überschreiten dieses Grenzdruckes öffnet das Druckbegrenzungsventil 98, so daß Druckmittel über den Kanal 94, die Anschlüsse P und S und den Rücklaufkanal 74 zum Tank T abströmen kann. Durch die Druckmittelströmung entsteht wieder ein Druckabfall über der Zulaufblende 96, so daß die Druckplatte 42 abhebt und der Dichtspalt zur internen Rückführung des Druckmittels in der Innenzahnradpumpe 30 vergrößert wird. Bei Absinken des Druckes unterhalb den voreingestellten Grenzdruck schließt das Druckbegrenzungsventil 98, so daß die Druckplatte 42 wieder in ihre Dichtposition vorgespannt ist - der Förderstrom steigt an.

Ein wesentlicher Aspekt bei den zuvor beschriebenen Ausführungsbeispielen ist, daß der auf die Rückseite der Druckplatte 42 wirkende Druck in Abhängigkeit von den Bedienparametern über die Motor-/Getriebesteuerung veränderbar ist.

Bei den in den Fig. 4 und 5 dargestellten Ausführungsbeispielen wird über den Elektromagneten 90 die Vorspannung der Feder 88 eingestellt. Prinzipiell ließe sich auch ein direkt wirkender Elektromagnet einsetzen. Selbstverständlich könnten in kinematischer Umkehr auch ziehende Magnete eingesetzt werden.

Offenbart ist eine Druckmittelversorgung für ein CVT-Getriebe, bei dem das Druckmittel über eine Drehkolbenpumpe, vorzugsweise eine Innenzahnradpumpe gefördert wird. Zur Einstellung des Förderstroms kann der Druck auf die Rückseite einer den Verdrängerraum abdichtenden Druckplatte über ein elektrisch verstellbares Regelventil eingestellt werden.

## Patentansprüche

1. Druckmittelversorgung eines CVT-Getriebes (1), mit einer Pumpe (30), über die zur Veränderung der Getriebeübersetzung Stellzylinder (22, 24) mit Druckmittel versorgbar sind, wobei der Pumpe (30) eine Regelventilanordnung (28) zugeordnet ist, über die zur Förderstromregelung ein Bypasskanal (62) zwischen Hochdruckseite (40) und Niederdruckseite (39) der Pumpe (30) auf- oder zusteuerbar ist und die elektrisch angesteuert ist,
**dadurch gekennzeichnet, daß** die Pumpe (30) eine Drehkolbenpumpe ist, bei der die Verdrängerkammern stirnseitig durch eine axial bewegliche Druckplatte (42) abgedichtet sind, deren Rückseite über die Regelventilanordnung (28) mit einem Steuerdruck beaufschlagbar ist, um über den Bypasskanal (62) einen Dichtspalt zu verändern, der von Pumpenteilen (36,38) und der Druckplatte begrenzt ist.

2. Druckmittelversorgung nach Anspruch 1,
**dadurch gekennzeichnet, daß** die Regelventilanordnung (28) eine Dreiwege-Druckwaage (68) mit einem Druckanschluß (P), einem Rücklaufanschluß (S) und einem hydraulisch mit der Druckplattenrückseite verbundenen Steueranschluß (C) hat, deren Kolben einerseits von einem Druck stromaufwärts einer zwischen Stellzylinder (22, 24) und Pumpe (30) angeordneten Meßblende (66) und andererseits von dem Druckstrom abwärts der Meßblende (66) und der Kraft eines Elektromagneten (90) veränderbar ist, so daß durch Erhöhung der Kraftspannung der Kolben in Richtung einer Steuerdruckerhöhung und durch Verringerung der Kraft der Kolben in Richtung einer Steuerdruckabsenkung beaufschlagbar ist.

3. Druckmittelversorgung nach Anspruch 2,
**dadurch gekennzeichnet, daß** die Druckwaage (68) eine Stellung hat, in der der Druckanschluß (P) und der Steueranschluß (C) mit dem Rücklaufanschluß (S) verbunden sind.

4. Druckmittelversorgung nach Anspruch 2 oder 3,
**dadurch gekennzeichnet, daß** der Kolben mit einer die Meßblende bildenden Meßblendenbohrung (66) durchsetzt ist und zwei Steuerkanten hat, über die der Steueranschluß (C) zur Steuerdruckerhöhung mit dem Druckanschluß (P) und zur Steuerdruckerniedrigung mit dem Rücklaufanschluß (S) verbindbar ist.

5. Druckmittelversorgung nach Anspruch 1,
**dadurch gekennzeichnet, daß** der Steuerdruck über einen Kanal (94) mit Zulaufblende (96) von einem Bereich stromabwärts der Pumpe (30) abgegriffen ist und über ein elektrisch betätigtes Druckbegrenzungsventil (98) begrenzbar ist, das in Öffnungsrichtung von dem Druckstrom abwärts der Zulaufblende (96) und in Schließrichtung von der Kraft eines Elektromagneten (90) beaufschlagt ist.

6. Druckmittelversorgung nach Anspruch 1,
**dadurch gekennzeichnet, daß** der Steuerdruck über einen Kanal (94) mit Zulaufblende (96) von einem Bereich stromabwärts der Pumpe (30) abgegriffen ist, und daß über die Regelventilanordnung (28) der Kanal (94) zur Steuerdruckabsenkung mit einem Rücklaufkanal (74) verbindbar ist, wobei der Kolben der Regelventilanordnung (28) über einen Druck stromaufwärts einer zwischen der Pumpe (30) und dem Stellzylinder (22, 24) angeordneten Meßblende (66) in Öffnungsrichtung und über den Druck stromabwärts der Meßblende (66) und der Kraft eines Elektromagneten (90) in Schließrichtung beaufschlagt ist.

7. Druckmittelversorgung nach Anspruch 6,
**dadurch gekennzeichnet, daß** die Regelventilanordnung (28) eine Zweiwege-Druckwaage (98) hat.

8. Druckmittelversorgung nach einem der Ansprüche 1 bis 7,
**dadurch gekennzeichnet, daß** die Pumpe eine Innenzahnradpumpe (30) mit Zahnrädern (36,38) als Pumpenteile ist.

## Claims

1. A pressure-medium supply arrangement for a CVT (1), having a pump (30) by way of which actuating cylinders (22, 24) may be supplied with a pressure medium for the purpose of altering the transmission ratio, a control-valve arrangement (28) being associated with the pump (30), by which a bypass channel (62) between a high pressure side (40) and a low pressure side (39) of the pump (30) is controllable such that it may be opened or closed for the purpose of controlling a delivery flow and which is electrically controlled,
**characterised in that** the pump (30) is a rotary pump in which the displacement chambers are sealed along the end face by an axially movable pressure plate (42), the rear side of which may be acted upon by a control pressure by way of the control-valve arrangement (28) in order to alter a sealing gap by way of the bypass channel (62), said sealing gap being delimited by the pump parts (36, 38) and the pressure plate.

2. A pressure-medium supply arrangement according to Claim 1,
**characterised in that** the control-valve arrangement (28) has a three-way pressure balance (68) having a pressure connection (P), a return connection (S) and a control connection (C) which is hydraulically connected to the pressure-plate rear side, the piston of which may be altered on the one hand by a pressure upstream of a metering orifice (66) arranged between the actuating cylinder (22, 24) and the pump (30) and on the other hand by the pressure flow downstream of the metering orifice (66) and the force of an electromagnet (90), so that, by increasing the tension force, the piston may be acted upon in the direction in which the control pressure increases and, by reducing the force, the piston may be acted upon in the direction in which the control pressure decreases.

3. A pressure-medium supply arrangement according to Claim 2,
**characterised in that** the pressure balance (68) has a position in which the pressure connection (P) and the control connection (C) are connected to the return connection (S).

4. A pressure-medium supply arrangement according to Claim 2 or 3,
**characterised in that** the piston contains a metering-orifice bore (66) forming the metering orifice and has two control edges by way of which the control connection (C) may be connected to the pressure connection (P) for the purpose of increasing the control pressure and to the return connection (S) for the purpose of reducing the control pressure.

5. A pressure-medium supply arrangement according to Claim 1,
**characterised in that** the control pressure is measured from a region downstream of the pump (30) by way of a channel (94) having an inlet orifice (96), and may be limited by way of an electrically actuated pressure-limiting valve (98) which may be acted upon in the opening direction by the pressure flow downstream of the inlet orifice (96) and in the closing direction by the force of an electromagnet (90).

6. A pressure-medium supply arrangement according to Claim 1,
**characterised in that** the control pressure is measured from a region downstream of the pump (30) by way of a channel (94) having an inlet orifice (96), and **in that** the channel (94) may be connected to a return channel (74) by way of the control-valve arrangement (28) for the purpose of decreasing the control pressure, the piston of the control-valve arrangement (28) being acted upon in the opening direction by way of a pressure upstream of a metering orifice (66) arranged between the pump (30) and the actuating cylinder (22, 24) and in the closing direction by way of the pressure downstream of the metering orifice (66) and the force of an electromagnet (90).

7. A pressure-medium supply arrangement according to Claim 6,
**characterised in that** the control-valve arrangement (28) has a two-way pressure balance (98).

8. A pressure-medium supply arrangement according to one of Claims 1 to 7, **characterised in that** the pump is an internal-gear pump (30) having toothed gears (38) as pump parts.

## Revendications

1. Alimentation en fluide sous pression d'une boîte de vitesses (1) du type à transmission variable en continu ("CVT, ou continuous variable transmission"), avec une pompe (30) via laquelle des cylindres de réglage (22, 24) sont susceptibles d'être alimentés en fluide sous pression pour modifier le rapport de la boîte de vitesses, un agencement de vanne de régulation (28) étant associé à la pompe (30), via lequel, pour réguler le débit, un canal de by-pass (62) entre le côté haute pression (40) et le côté basse pression (39) de la pompe peut être ouvert ou fermé, et qui est piloté par voie électrique,
**caractérisée en ce que** la pompe (30) est une pompe à piston rotatif dans laquelle les chambres de refoulement sont étanchées du côté frontal par une plaque de serrage (42) axialement mobile dont le côté postérieur est susceptible d'être sollicité par une pression de commande via l'agencement de vanne de régulation (28) afin de modifier via le canal de by-pass (62) un intervalle d'étanchement qui est délimité par des parties de pompe (36, 38) et par la plaque de serrage.

2. Alimentation en fluide sous pression selon la revendication 1,
**caractérisée en ce que** l'agencement de vanne de régulation (28) comprend une balance de pression à trois voies (68) avec un raccord de pression (P), un raccord de retour (S) et un raccord de commande (C) relié par voie hydraulique au côté postérieur de la plaque de serrage, dont le piston est variable d'une part par une pression en amont d'un diaphragme de mesure (66) agencé entre les cylindres de réglage (22, 24) et la pompe (30) et d'autre part par le courant sous pression en aval du diaphragme de mesure (66) et par la force d'un électroaimant (90), de sorte que par augmentation des forces, le piston est susceptible d'être sollicité dans le sens d'une augmentation de la pression de commande et par une réduction des forces le piston est susceptible d'être sollicité dans le sens d'une réduction de la pression de commande.

3. Alimentation en fluide sous pression selon la revendication 2, **caractérisée en ce que** la balance de pression (68) présente une position dans laquelle le raccord de pression (P) et le raccord de commande (C) sont reliés au raccord de retour (S).

4. Alimentation en fluide sous pression selon l'une ou l'autre des revendications 2 et 3, **caractérisée en ce que** le piston est traversé par un perçage (66) formant le diaphragme de mesure et possède deux arêtes de commande via lesquelles le raccord de commande (C) est susceptible d'être relié au raccord de pression (P) pour augmenter la pression de commande et au raccord de retour (S) pour baisser la pression de commande.

5. Alimentation en fluide sous pression selon la revendication 1, **caractérisée en ce que** la pression de commande est prélevée d'une zone en aval de la pompe (30) via un canal (94) à diaphragme d'entrée (96) et est susceptible d'être limitée via une vanne de limitation de pression (98) à actionnement électrique qui est sollicitée dans le sens d'ouverture par le courant sous pression en aval du diaphragme d'entrée (96) et dans le sens de fermeture par la force d'un électroaimant (90).

6. Alimentation en fluide sous pression selon la revendication 1, **caractérisée en ce que** la pression de commande est prélevée d'une zone en aval de la pompe (30) via un canal (94) à diaphragme d'entrée (96), et **en ce que** le canal (94) est susceptible d'être relié à un canal de retour (74) via l'agencement de vanne de régulation (28) pour baisser la pression de commande, le piston de l'agencement de vanne de régulation (28) étant sollicité dans le sens d'ouverture par une pression en amont d'un diaphragme de mesure (66) agencé entre la pompe (30) et le cylindre de réglage (22, 24) et dans le sens de fermeture par la pression en aval du diaphragme de mesure (66) et par la force d'un électroaimant (90).

7. Alimentation en fluide sous pression selon la revendication 6, **caractérisée en ce que** l'agencement de valve de régulation (28) possède une balance de pression à deux voies (98).

8. Alimentation en fluide sous pression selon l'une des revendications 1 à 7, **caractérisée en ce que** la pompe est une pompe à roues à denture intérieure (30) comportant des roues à dentures (36, 38) à titre de parties de pompe.
